# EUROPEAN PATENT SPECIFICATION

(11) **EP 3 818 255 B1**
(45) Date of publication and mention of the grant of the patent: **07.09.2022**
(21) Application number: 19739875.3
(22) Date of filing: 04.07.2019
(51) Int. Cl.: F01M 1/16, F16N 7/38, F16N 13/04, F16N 13/16, F16N 29/02, F01M 1/02, F01M 1/08

(54) **A METHOD FOR OPTIMIZING LUBRICATION IN A LARGE SLOW-RUNNING TWO-STROKE ENGINE**
VERFAHREN ZUR OPTIMIERUNG DER SCHMIERUNG IN EINEM GROSSEN, LANGSAM LAUFENDEN ZWEITAKTMOTOR
PROCÉDÉ D'OPTIMISATION DE LUBRIFICATION DANS UN GROS MOTEUR À DEUX TEMPS LENT

(30) Priority: 06.07.2018 DK PA201870472
(43) Date of publication of application: 12.05.2021
(73) Proprietor: Hans Jensen Lubricators A/S, 9560 Hadsund (DK)
(72) Inventor: BAK, Peer, 9300 Sæby (DK); KRISTENSEN, Nikolaj, 9000 Aalborg (DK)
(74) Representative: Patrade A/S
(86) International application number: PCT/DK2019/050218
(87) International publication number: WO 2020/007433

(56) References cited:
- WO-A1-2009/015666
- DE-B4- 19 743 955
- JP-A- 2015 007 430
- KR-A- 20180 020 106
- US-A1- 2010 006 056

## Description

### FIELD OF THE INVENTION

The present invention relates to a method for optimizing lubrication in a large slow-running two-stroke engine. An existing lubrication system is modified for more frequent injection and lower lubricant volume per injection. For example, the large slow-running two-stroke engine is a marine engine or a large engine in power plants.

### BACKGROUND OF THE INVENTION

Due to the focus on environmental protection, efforts are on-going with respect reduction of emissions from marine engines. This also involves the steady optimization of lubrication systems for such engines, especially due to increased competition. One of the economic aspects with increased attention is a reduction of oil consumption, not only because of environmental protection but also because this is a significant part of the operational costs of ships. A further concern is proper lubrication despite reduced lubricant volume because the longevity of diesel engines should not be compromised by the reduction of oil consumption. Thus, there is a need for steady improvements with respect to lubrication.

For lubricating of large slow-running two-stroke marine diesel engines, several different systems exist, including injection of lubrication oil directly onto the cylinder liner or injection of oil quills to the piston rings.

An alternative and relatively new lubrication method, compared to traditional lubrication, is commercially called Swirl Injection Principle (SIP). It is based on injection of a spray of atomized droplets of lubricant into the scavenging air swirl inside the cylinder. The helically upwards directed swirl results in the lubricant being pulled towards the Top Dead Centre (TDC) of the cylinder and pressed outwards against the cylinder wall as a thin and even layer. This is explained in detail in international patent applications WO2010/149162 and WO2016/173601. Examples of SIP lubricant injector systems in marine engines are disclosed in international patent applications WO2002/35068, WO2004/038189, WO2005/124112, WO2010/149162, WO2012/126480, WO2012/126473, WO2014/048438, and WO2016/173601. The injectors comprise an injector housing inside which a reciprocating valve member is provided, typically a valve needle. The valve member, for example with a needle tip, closes and opens the lubricant's access to a nozzle aperture according to a precise timing. In current SIP systems, a spray with atomized droplets is achieved at a pressure of, typically, 35-65 bar, which is substantially higher than the oil pressure of less than 10 bar that are used for systems working with compact oil jets that are introduced into the cylinder. In some types of SIP valves, the high pressure of the lubricant is also used to move a spring-loaded valve member against the spring force away from the nozzle aperture such that the highly pressurised oil is released therefrom as atomized droplets. The ejection of oil leads to a lowering of the pressure of the oil on the valve member, resulting in the valve member returning to its origin and remaining there until the next lubricant cycle where highly pressurized lubricant is supplied to the lubricant injector again.

In such large marine engines, a number of injectors are arranged in a circle around the cylinder, and each injector comprises one or more nozzle apertures at the tip for delivering lubricant jets or sprays into the cylinder from each injector.

One of the currently more traditional approaches for lubrication of marine engines is disclosed in German patent document DE19743955B4 and equivalent Danish patent DK173288B1. It discloses a lubrication system in which a central controller feeds lubricant to a lubricator for each cylinder of the marine engine. The lubricator distributes lubricant to a plurality of lubricant injectors distributed around the circumference of the cylinder. The lubricator comprises a housing in which a plurality of piston pumps are arranged around a circle and driven synchronous in common by a hydraulic driven actuator piston 123. Each of the piston pumps comprises an injection plunger 119 that is pumping lubricant through a non-return valve to one of the injectors of a single cylinder. The hydraulic driven actuator piston 123 is moving over an adjustable distance between its stationary rearward end stop and a forward end stop that is adjustable by an adjusting screw. For turning the adjusting screw, it is accessible at an end cap that covers a flange of the housing, through which the adjusting screw extends.

In connection with injection of compact jets of lubricant into marine engine cylinders and also for lubricant quills onto the piston between the piston rings, this system has gained widespread distribution and is marketed under the trade name Alpha lubricator by the company MAN B&W Diesel and Turbo.

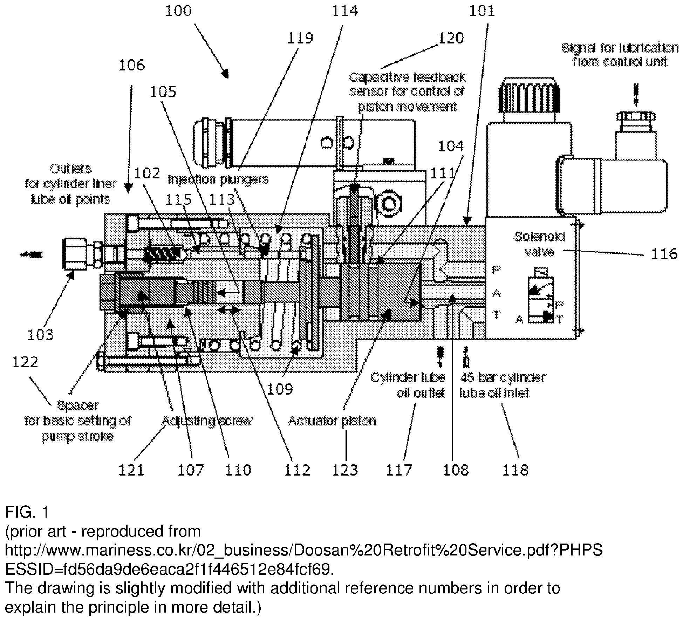

FIG. 1 illustrates an example of an Alpha lubricator as it is found on the Internet page http://www.mariness.co.kr/02_business/Doosan%20Retrofit%20Service.pdf?PHPSES SID=fd56da9de6eaca2flf446512e84fcf69. The drawing is slightly modified with additional reference numbers in order to explain the principle in more detail.

Similar to the above mentioned DE19743955B4 and DK173288B1, the Alpha lubricator 100 comprises a housing 101 in which a plurality of injection plungers 119 are arranged one a circle and driven synchronous in common by a hydraulic driven actuator piston 123. Each injection plunger 119 is arranged slidingly in a dosing channel 115 receiving lubricant from an internal volume 114 of the housing 101 through an inlet aperture 113. The inlet aperture 113 is closed by the injection plunger 119 during forward motion of the injection plunger 119 so that further forward motion by the injection plunger 119 pressurizes the received lubricant in the remaining part of the dosing channel 115 and pumps it through a non-return valve 102 into a pipe 103 and to one of the injectors of a single cylinder. During retraction of the actuator piston 123, caused by the pre-stressed spring 109, the injection plunger 119 is retracted, and vacuum created in the dosing channel 115, until the forward end of the injection plunger 119 is retracted past the inlet aperture 113 and lubricant can flow through the inlet aperture 113 and refill the dosing channel 115.

The volume of lubricant pressurized by the injection plunger 119 in the dosing channel 115 and expelled through the non-return valve 102 is defined by the travel distance of the injection plunger 119 from the inlet aperture 113 to the most forward position before retraction. During the movement of the actuator piston 123 over the stroke length, the first part of the movement of the injection plunger 119 past the inlet aperture 113, and only once the injection plunger 119 has moved past the inlet aperture 113 and closed it, the lubricant is pressurised and expelled from the remaining dosing channel distance.

In such configuration, the dosing channel distance is less than the stroke length. However, the dosing channel distance over which the lubricant is pressurised and expelled from can also be equal to the stroke length, for example in the case where lubricant is provided through a non-return valve in the forward most part of the dosing channel. An example of such construction in a controller is disclosed in FIG. 5 of DE19743955B4.

The hydraulic driven actuator piston 123 is moving over an adjustable distance between its stationary rearward end stop 104 and a forward end stop 105 that is adjustable by an adjusting screw. For turning the adjusting screw 121, it is accessible at an end cap 106 that covers a flange 107 of the housing 101, through which the adjusting screw 121 extends. The flange 107 in the Alpha lubricator 100 supports the spacer 122 and contains a threading 110 for adjustment of the adjusting screw 121. The reciprocal actuator piston 123 is driven by oscillating oil pressure in the volume 108 behind the actuator piston 123, where a solenoid valve 116 shifts between two pressure levels in this volume 108 behind the actuator piston 123. Once, the lower pressure level is reached, a spring 109 load presses the actuator piston 123 back to the rear end stop. The solenoid valve 116 is regulated by corresponding signals from a control unit.

As can be seen in FIG. 1, a spacer 122 for basic settings of the pump stroke is provided in the 107 flange behind the end cap 106, at which the head of the adjusting screw 121 is accessible for adjustment by rotation. Accordingly, there are two adjustment features, namely a basic adjustment feature by the spacer 122 and the adjustment by the adjusting screw 121. For the spacer variation, the basis setting is delimited by the length of the threading 110 that holds the adjusting screw 121 and in which the adjusting screw 121 is rotated for adjustment. The length of the threading 110 is much less than the spacer illustrated in FIG. 1.

However, as explained in the following, another feature delimits a possible reduction of the stroke length 112 of the actuator piston 123.

In this marketed product, the Alpha lubrication system is modified as compared to the above mentioned patents DE19743955B4 and DK173288B1 in that a capacitive feedback sensor 120 is used to verify a sufficiently long stroke length of the hydraulic actuator.

This feedback sensor 120 is also illustrated in FIG 1. As illustrated, the hydraulic actuator piston comprises two circumferential grooves 111, and the feedback sensor 120 gives a confirmation signal of proper lubrication to the central controller if the stroke of the hydraulic actuator piston 123 is long enough for the second groove 111 to move pass the feedback sensor120. When the first and second grooves 111 pass by the feedback sensor 120, the feedback sensor 120 creates a double-pulsed signal which the central controller takes as confirmation of proper lubrication. If only one the first groove 111 passes by the feedback sensor 120, the corresponding single-pulsed signal from the feedback sensor 120 indicates to the central controller general functioning of the feedback sensor 120 and movement of the actuator piston 123 over at least a small distance but not sufficient movement of the actuator piston 123 for proper lubrication. If the feedback sensor 120 is giving any signal, a warning message is provided by the controller that the stroke was not measured as long enough for proper lubrication.

Although, the forward end stop 105 for the hydraulic actuator piston 123 is adjustable by the adjusting screw 121 and potentially further adjustable by the spacer 122, the minimum stroke length of the hydraulic actuator piston 123 must still be sufficiently long for the second groove 111 to move past the feedback sensor 120, as otherwise the controller is caused to register insufficient lubrication.

The amount for injection by the Alpha lubricator is determined by the frequency for injection into the engine. In practice, lubricant injection by the Alpha lubricator is not performed for each revolution of the engine but typically only for each fixed number of revolutions, for example one injection for each 10 or 12 revolutions of the engine.

In some research projects, indications have been found that more frequent injection than one injection for each 10 or 12 engine revolutions leads to a better lubrication result for the marine engine and reduces wear in the engine cylinder. The higher injection frequency requires lower dosages per injection in order not to increase the total lubricant consumption. Documentary reference is made to the Paper No. 283 by Jensen et al. published at the CIMAC congress in Finland June 6-10, 2016 "Lubtronic SIP promise remarkably low wear rates with low CLO consumption"

However, when considering a possible change of the Alpha system to more frequent lubrication, this implies difficulties in that the stroke length of the actuator piston 123 cannot be reduced below the minimum stroke length as determined by the cooperation of the feedback sensor 120 with the grooves 111 in the actuator piston 123 in the Alpha lubricator 100, as already discussed above. The minimum stroke length as determined by the feedback sensor 120 is not easily reduced, as the signal is provided by fixed grooves groove 111 in the metallic actuator piston 123. Accordingly, such change of the Alpha lubricator 100 to lubrication with higher frequency is a complex task.

This problem is of general nature and applies equally well when modifying an Alpha system to an extent that it is specifically suitable as lubricator for SIP injection.

In this connection, it is put forward that the market has an increasing demand for SIP injection system due to its advantages for proper lubrication at low lubricant consumption. However, in some instances, there is a request for not exchanging the entire lubrication system of the engine but only those parts that are necessary to exchange in order to achieve the desired effect. This is not only a matter of costs but also based on interest to keep those modules of the system that appear to function well. Especially, there is a general demand to change the compact jet injection to SIP injection with a mist of lubricant.

In those cases where Alpha lubricators have been used for compact jet injection, and SIP injectors are mounted as a substitution for compact jet injectors, further modifications are necessary, as the SIP injectors are desired with a higher injection frequency than used for compact jet injection using Alpha lubricators. For example, a SIP injection is done for every revolution or even with more than one injection per revolution. However, as mentioned above, such upgrade appears to be a major task due to the feedback sensor.

Accordingly, it would be desirable to find a proper upgrade procedure.

### DESCRIPTION / SUMMARY OF THE INVENTION

It is an objective of the invention to provide an improvement in the art. A particular objective is to provide a method for upgrade of a lubrication system for a large slow-running two-stroke engine, in particular an Alpha lubrication system. It is a further objective to provide a lubrication system suitable for SIP injection. This objective is achieved by a method of improving the lubrication of a large slow running engine. It is in particular achieved by a method for modifying a lubrication system as explained in more detail in the following.

The lubrication system provides lubricant to injectors for lubricating the cylinder or cylinders in a large slow-running two-stroke engine engine, for example a marine engine or a large engine in power plants. Typically, the engine is burning diesel or gas fuel. The engine comprises one or more cylinders, each with a reciprocal piston inside and with a plurality of lubricant injectors distributed along a perimeter of the cylinder for injection of lubricant into the cylinder at various positions on the perimeter during injection phases.

The lubrication system comprises a lubricator that is pipe-connected to each injector by a lubricant feed conduit for providing pressurized lubricant to each injector though the lubricant feed conduit during the injection phases.

The lubricator is of the type that comprises a housing in which a hydraulic-driven actuator piston is arranged reciprocal with a stroke length along a stroke direction. The lubricator further comprises a stroke length adjustment mechanism configured for variably adjusting the stroke length of the reciprocal hydraulic-driven actuator piston between a minimum stroke length and a maximum stroke length.

The lubricator further comprises a plurality of injection plungers slidingly arranged in corresponding dosing channels, wherein the injection plungers are coupled to the actuator piston in order to be moved by the actuator piston and for pressurizing lubricant in the dosing channels during this movement. When the actuator piston is moved over the stroke length, the injector plungers are moved over a corresponding length. The movement the injection plungers inside the dosing channel pressurizes the lubricant in the dosing channel while the injection plungers move over a dosing channel distance, where the dosing channel distance defines the volume of lubricant expelled from the dosing channel during the injection phase through a non-return valve and through the feed conduit to the injector for injection of the lubricant into the engine cylinder.

As will be apparent below, the dosing channel distance is equal to or less than the stroke length. This depends on the configuration as also discussed above.

The dosing channel distance is adjustable between a minimum dosing channel distance and a maximum dosing channel distance corresponding to the actuator piston's variable stroke length between the minimum stroke length and the maximum stroke length. By reducing the stroke length of the actuator piston, also the dosing channel distance is reduced and the expelled lubricant volume correspondingly.

The lubricator also comprises an electrical valve arranged for causing switch between hydraulic pressure levels that are acting on the actuator piston in order to hydraulically drive the actuator piston reciprocally by the switching pressure levels. Typically, the actuator piston is pre-stressed against the rear end stop by a helical spring.

In some concrete embodiments, the lubricator receives high pressure oil for driving the actuator piston, and the electrical valve switches between
a) access of the pressurized oil to the actuator piston in the injection phase and
b) connection between the actuator piston and a drain for drainage of oil from the actuator piston between injection phases.

The lubrication system further comprises a controller electrically connected to the electrical valve for controlling the timing of the switching for the injection phases by corresponding electrical signals transmitted from the controller to the electrical valve.

According to the above objective, the lubrication system is modified after a certain time of normal operation of the engine.

In more detail, the method comprises
- operating the engine with lubrication from the lubricator under control of the controller with one injection through the lubricant injectors for each first number of engine revolutions;
- stopping the operation of the engine for modification of the lubrication system;
- modifying the lubrication system;
- continuing operation of the engine with the modified lubrication system.

The modification of the lubrication system comprises modifying the lubricator by reducing the dosing channel distance to less than the minimum dosing channel distance and operating the engine with reduced dosing channel distance and correspondingly reduced volume of lubricant expelled from the dosing channel per injection phase.

Further, the modification comprises operating the engine with lubrication from the modified lubricator at higher injection frequency with one injection phase for each second number of engine revolutions, wherein the second number is smaller than the first number.

As it appears from above, the upgrade results in increasing the injection frequency and reducing the lubricant volume per injection. The increased injection frequency improves the lubrication effect and reduces wear of the engine. Documentary reference is made to the Paper No. 283 by Jensen et al. published at the CIMAC congress in Finland June 6-10, 2016 "Lubtronic SIP promise remarkably low wear rates with low CLO consumption" Further reference to the SIP injection is found in the publication "SWIRL INJECTION LUBRICATION - A NEW TECHNOLOGY TO OBTAIN LOW CYLINDER OIL CONSUMPTION WITHOUT SACRIFICING WEAR RATES" by Lauritsen et al, published at the 2001 CIMAC Congress in Hamburg.

Advantageously, the total lubricant consumption in the continued operation of the engine with the modified lubricator is less than or equal to the lubricant consumption prior to modifying the lubrication system. As the higher frequency for injection does not compromise the aim for minimal oil consumption, the overall result is a better lubrication without increasing the environmental aspects of low consumption of lubricant.

In some embodiments, in particular for the Alpha lubricator, the housing comprises an internal volume containing lubricant, and the dosing channel comprises an inlet aperture that is in fluid-flow connection with the internal volume for receiving lubricant from the internal volume when the injection plungers are in the retracted position. The inlet aperture has an aperture width between a rear aperture edge and a front aperture edge and is configured to be closed by the injection plunger during motion of the injection plunger past the front aperture edge so that further motion by the injection plunger along the dosing channel distance, as measured from the front aperture edge to the most forward position of the injection plunger, pressurizes the received lubricant in the dosing channel and expels it through the non-return valve.

An option for modification for these embodiments is reducing of the dosing channel distance comprises increasing the width of the inlet aperture in the forward direction. In this case, the movement of the injection plunger past the front aperture edge of the inlet aperture occurs later during the stroke of the actuator piston, and the remaining part of the dosing channel, namely the dosing channel distance, in which the lubricant is pressurized and from which it is expelled is shortened.

An alternative option is the provision of a further inlet channel closer to the most forward position of the injection plunger. The lubricant is then pressurized and expelled only once the injection plunger has moved past the further inlet channel. This also shortens the dosing channel distance over which the lubricant is pressurized and from which it is expelled.

Alternative, and potentially additional, modification of the lubrication system comprises modifying the lubricator by changing the stroke length to less than the original minimum stroke length; and operating the engine with lubrication from the modified lubricator with modified stroke length less than the original minimum stroke length and at higher injection frequency with one injection for each second number of engine revolutions, wherein the second number is smaller than the first number.

In some embodiments, especially as discussed above in relation to the Alpha lubricator, the lubricator prior to the modification of the lubrication system comprises a feedback sensor that is configured for measuring a stroke at least as long as a predetermined minimum displacement of the actuator piston during the injection phase and for providing a feedback signal when the minimum displacement is measured. The controller is configured for receiving the feedback signal as a confirmation for proper lubrication.

Optionally, the actuator piston is provided with a groove that is moving past the feedback sensor during motion of the actuator piston in the event that the stroke length is at least as long as a predetermined minimum displacement, the latter assuring proper lubricant injection. As also discussed above, reducing the stroke length to below the predetermined minimum displacement has a problem in that the modification in this case results in a lack of proper feedback signal.

As the feedback sensor is an indicator for proper functioning in the lubrication system prior to modification, and the proper reading by the sensor is linked to the mechanical part of the actuator piston, a special modification is necessary, as a constant error or warning signal from the controller would not be adequate.

This problem can be solved by feeding the central controller with a corresponding signal from an electronic signal emulator. In this case, the lacking signal from the feedback sensor to the central controller is substituted by an emulated signal from the signal emulator such that the central controller is receiving a signal for proper lubrication from the emulator.

In more detail, the modifying of the lubrication system comprises providing a feedback signal emulator separate from the feedback sensor, electrically decoupling the feedback sensor from the controller and feeding an emulated feedback signal from the feedback signal emulator to the controller for emulating proper lubrication to the controller despite the actuator piston being operated at a modified stroke length less than the minimum stroke length and with less than the predetermined minimum displacement.

Potentially, the central controller's function of checking for the signal from the feedback sensor or the emulator is decoupled from the central controller's function of adjustment of the total lubricant volume. Thus, even if a signal from the emulator is received by the central controller for a sufficient stroke length, the stroke length itself can be reduced to below the predetermined minimum displacement without the central controller recognizing this as a fault in the system.

In some embodiments, the feedback sensor is configured for providing a feedback signal with a first type of feedback signal, for example a feedback signal with a single pulse, if the feedback sensor senses displacement of the actuator piston from a position in its idle phase between injection phases and wherein the feedback sensor is providing a second type of feedback signal, for example a feedback signal with two pulses, only if the actuator piston reaches the predetermined minimum displacement during the injection phase. For this embodiment, the lubrication system is advantageously modified in causing the feedback signal emulator to provide an emulated second type of feedback signal to the controller as a consequence of receiving a first type of signal from the feedback sensor, as this indicates movement of the actuator piston. However, if no signal is received from the feedback sensor, also no signal is sent to the controller, which will then cause the controller to provide an alarm. On the other hand, if the stroke of the actuator piston is long enough to cause the feedback sensor to provide a second type of signal, the emulator would also send a second type of signal to the controller.

Optionally, the feedback signal emulator is equipped with LED's to ensure that the feedback sensor is in proper working condition with visual inspection.

This decoupling between the injected volume of lubricant and the signal from the feedback sensor eases the adjustment of the central controller to cause injection of a lower portion of lubricant per injection but at higher injection frequency.

Some practical ways for reducing the stroke length are outlined in the following.

In some embodiments, the stroke of the actuator piston is defined by a forward end stop and a rear end stop, wherein a position of the forward end stop or the rear end stop is defined by an adjustment mechanism that is adjustable between a minimum position and a maximum position, wherein the minimum position defines the minimum stroke length and the maximum position defines the maximum stroke length. The lubrication system is modified by changing the minimum position to a modified minimum position that defines the modified minimum stroke length. For example, the modified minimum stroke length is shorter than the predetermined minimum displacement

For example, the position of the forward end stop is defined by one end of a stroke-length adjusting screw, adjustable along the stroke length by rotation of the stroke-length adjusting screw. A way of modifying the lubrication system comprises exchanging the stroke-length adjusting screw with a longer, modified adjusting screw. Alternatively, it is possible to add material to the stroke-length adjusting in a space between the stroke-length adjusting screw and the actuator piston, thereby effectively making the screw longer and reducing the stroke length.

In some embodiments, the lubricator comprises a flange with a screw support that is supporting the stroke-length adjusting screw. A way of modifying the lubrication system comprises exchanging the flange or removing material from the flange by machining the flange.

By reducing the length of the flange when measured in a direction parallel to the stroke of the actuator piston, the screw support is displaced towards the actuator piston resulting in moving the forward end stop as defined by the stroke-length adjusting screw towards the actuator piston, which changes the minimum position.

A potential modification of the flange, in the case where the adjusting screw is adjustable by rotation in a thread in the flange, implies machining the flange by increasing the length of the threading in a direction towards the actuator piston and thereby increasing adjustment length of the adjusting screw. By rotation of the adjustment screw over a larger length, the stroke length of the actuator piston is decreased.

For example, an electrical motor is mounted onto the end of the screw for rotating it. The latter allows motorised adjustment of the position of the adjustment screw and consequently motorised adjustment of the stroke length. This allows for varying the stroke length between injections by rotation of the adjusting screw by the motor. For example, the motor is controlled by the upgrade controller so that the stroke of the actuator piston can be programmed and electronically adjusted.

Summarizing the above, the adjustment for more frequent injection needs the following adjustments:
1) decreasing the lubricant volume per injection
2) increasing the injection frequency
3) potentially emulating a signal as from the feedback sensor and feeding this emulated signal into the central controller.

In the event that the feed rate data in the central controller cannot be set to the specific amended distance to the forward end stop, it is possible to adjust the feed rate to a correct value by taking offset in the actually desired feed rate F_{desired} and dividing this term by the ratio R between the actual stroke length after modification and the original stroke length before modification. The stroke length as adjusted in the central controller would then be F_{controller}=F_{desired}/R.

Notice that R is less than 1 for a reduced stroke length. For example, if the stroke length is reduced from 12 to 6 mm, the ratio R is 6/12=0.5, and the central controller would have to be adjusted to the double feed rate as compared to a standard situation where the lubricator is not modified. For example, the double feed rate can be achieved with double frequency for injection.

The reduction of the stroke length by the method as outlined above needs some further considerations under special conditions. For example, if a cylinder liner or piston has been changed in the engine cylinder, a higher lubricant feed rate than possible with the shortened stroke length may be desired. The higher feed volume is optionally achieved with a higher lubrication frequency. Alternatively, the stroke length is enlarged for a limited period, for example by inserting a spacer between the flange and the remaining part of the housing in order to increase the distance to the forward end stop.

The fact that the end stop is moved back and forth before and after the limited period requires that the feed rate data are adjusted in the central controller or an equivalent feed rate is found where the central controller is adjusted to a certain feed rate F_{control-ler}=F_{desired}/R, as outlined above. This expression is also valid for a spacer that is inserted during the limited period, even if the spacer enlarges the stroke length to more than the original maximum value. The overall effect is that the feed rate in the central controller may be adjusted to a different value than the actual injected volume, the difference given by the ratio for the amended stroke length as compared to the original stroke length.

Optionally, for the adjustment of the feed rate and frequency, an upgrade controller is electronically inserted between the central controller and the lubricator. The upgrade controller is advantageously provided as an add-on unit. It receives the control signals from the central controller, including the timing signal for the correct timing of the injection by the lubricator as well as potential signals for adjusting the stroke length by the adjusting screw. On the basis of the signals received from the central controller, the upgrade controller sends modified timing signals and modified stroke adjustment signals to the lubricator. As the upgrade controller is programmed for the modified stroke length, the signals from the central controller are transformed as necessary into modified signals in order to provide correct timing, frequency and stroke length of the lubricator.

Potentially, the upgrade controller also contains the above mentioned emulator for the emulated feedback sensor signal and sends the emulated feedback sensor signal to the central controller in order for the central controller to avoid registering lack of feedback sensor signals that would indicate lack of proper lubrication.

For clarification, it is pointed out that the term "injector" is used for an injection valve system comprising an injector housing having a lubricant inlet port, flow-connected to the lubricant feed conduit for receiving lubricant from it for injection into the cylinder. The injector further comprises one single injection nozzle with a nozzle aperture as a lubricant outlet that extends into the cylinder for injecting lubricant from the inlet port into the cylinder in the injection phase. Although, the injector has a single nozzle that extends into the cylinder through the cylinder wall, when the injector is properly mounted, the nozzle itself, optionally, has more than a single aperture. For example, nozzles with multiple apertures are disclosed in WO2012/126480.

The term "injection phase" is used for the time during which lubricant is injected into the cylinder by an injector. The term "idle phase" is used for the time between injection phases. The term "injection-cycle" is used for the time it takes to start an injection sequence and until the next injection sequence starts. For example, the injection sequence comprises a single injection, in which case the injection-cycle is measured from the start of the injection phase to the start of the next injection phase. The term "timing" of the injection is used for the adjustment of the start of the injection phase by the injector relatively to a specific position of the piston inside the cylinder. The term "frequency" of the injection is used for the number of repeated injections by an injector per revolution of the engine. If the frequency is unity, there is one injection per revolution. If the frequency is 1/2, there is one injection per every two revolutions. This terminology is in line with the above mentioned prior art.

For example, each of the injectors comprises an outlet-valve system at the nozzle configured for opening for flow of lubricant to the nozzle aperture during an injection phase upon pressure rise above a predetermined limit at the outlet-valve system and for closing the outlet-valve system after the injection phase. The outlet-valve system closes off for back-pressure from the cylinder and also prevents lubricant to enter the cylinder unless the outlet-valve is open.

For example, the outlet-valve system comprises an outlet non-return valve. In the outlet non-return valve, the outlet-valve member, for example a ball, ellipsoid, plate, or cylinder, is pre-stressed against an outlet-valve seat by an outlet-valve spring. Upon provision of pressurised lubricant in a flow chamber upstream of the outlet-valve system, the pre-stressed force of the spring is counteracted by the lubricant pressure, and if the pressure is higher than the spring force, the outlet-valve member is displaced from its outlet-valve seat, and the outlet non-return valve opens for injection of lubricant through the nozzle aperture into the cylinder. For example, the outlet-valve spring acts on the valve member in a direction away from the nozzle aperture, although, an opposite movement is also possible.

For example, the central controller or the upgrade controller or both comprise a computer or is connected by an electronic wired or wireless connection to a computer, where the computer is of the type that is configured for monitoring parameters for the actual state and motion of the engine, such that the amount and timing of the lubricant injection is controlled on the basis of the parameters.

Optionally, the injectors are SIP injectors configured to provide a mist of lubricant into the scavenging air of the cylinders. A spray of atomized droplets, also called mist of oil, is important in SIP lubrication, where the sprays of lubricant are repeatedly injected by the injectors into the scavenging air inside the cylinder prior to the piston passing the injectors in its movement towards the TDC. In the scavenging air, the atomized droplets are diffused and distributed onto the cylinder wall, as they are transported in a direction towards the TDC due to a swirling motion of the scavenging air towards the TDC.

Examples of such injectors for SIP injection are disclosed in WO2012/126473. Additional options for SIP injectors with electrical valves are found in Danish patent applications DK2017 70936 and DK2017 70940.

For example, the injectors comprise a nozzle with a nozzle aperture of between 0.1 and 1 mm, for example between 0.2 and 0.5mm, and are configured for ejecting a spray of atomized droplets, which is also called a mist of oil.

The atomization of the spray is due to highly pressurized lubricant in the lubricant injector at the nozzle. The pressure is higher than 10 bar, typically between 20 bar and 120 bar for this high pressure injection. An example is an interval of between 30 and 80 bar, optionally between 35 and 60 bar. The injection time is short, typically in the order of 5-30 milliseconds (msec). However, the injection time can be adjusted to 1 msec or even less than 1 msec, for example down to 0.1 msec.

Also, the viscosity influences the atomization. Lubricants used in marine engines, typically, have a typical kinematic viscosity of about 220 cSt at 40°C and 20 cSt at 100°C, which translates into a dynamic viscosity of between 202 and 37 mPa·s. An example of a useful lubricant is the high performance, marine diesel engine cylinder oil ExxonMobil^{®} Mobilgard^{™} 560VS. Other lubricants useful for marine engines are other Mobilgard^{™} oils as well as Castrol^{®} Cyltech oils. Commonly used lubricants for marine engines have largely identical viscosity profiles in the range of 40-100°C and are all useful for atomization, for example when having a nozzle aperture diameter of 0.1-0.8 mm, and the lubricant has a pressure of 30-80 bar at the aperture and a temperature in the region of 30-100°C or 40-100°C. See also, the published article on this subject by Rathesan Ravendran, Peter Jensen, Jesper de Claville Christiansen, Benny Endelt, Erik Appel Jensen, (2017) "Rheological behaviour of lubrication oils used in two-stroke marine engines", Industrial Lubrication and Tribology, Vol. 69 Issue: 5, pp.750-753, https://doi.org/10.1108/ILT-03-2016-0075.

### SHORT DESCRIPTION OF THE DRAWINGS

The invention will be explained in more detail with reference to the drawing, where
- FIG. 1: is a reproduction of a drawing of an Alpha controller s published on the Internet site
http://www.manness.co.kr/02_business/Doosan%20Retrofit%20Service.pdf? PHPSESSID=fd56da9de6eaca2f1f446512e84fcf69
- FIG. 2: is a sketch of part of a cylinder in an engine;
- FIG. 3: a) illustrates an example of a lubricator before modification, b) illustrates an enlarged part of the lubricator around the inlet aperture, and c) illustrates the lubricator section of FIG. 3b after modification of the inlet aperture to a larger width;
- FIG. 4: illustrates a modification relatively to FIG. 3a after modification by provision of a new inlet aperture closer to the non-return valve from which the lubricant is expelled;
- FIG. 5: illustrates an example of a lubricator after modification by increasing the length of the adjusting screw;
- FIG. 6: a) illustrates an example of a lubricator where the spacer as illustrated in FIG. 3a has been removed and the lubricator flange has been modified by machining;
- FIG. 7: illustrates an alternative embodiment, wherein an upgrade controller is electronically inserted between the controller and the lubricator.

### DETAILED DESCRIPTION / PREFERRED EMBODIMENT

FIG. 1 is a reproduction of a drawing of an Alpha controller s published on the Internet site http://www.mariness.co.kr/02_business/Doosan%20Retrofit%20Service.pdf?PHPSES SID=fd56da9de6eaca2f1f446512e84fcf69.

For the method as described herein, this drawing of the Alpha lubricator serves as example for a concrete embodiment of a lubricator that is modified. Accordingly, the explanation as given in the introduction applies for the explanation of the modification equally well.

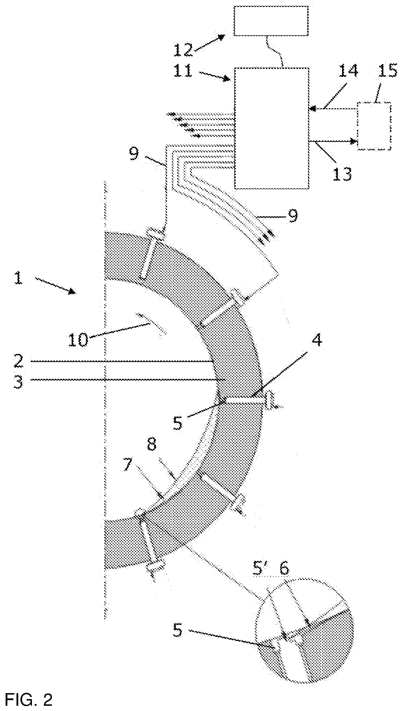

FIG. 2 illustrates one half of a cylinder of a large slow-running two-stroke engine, for example marine diesel engine. The cylinder 1 comprises a cylinder liner 2 on the inner side of the cylinder wall 3. Inside the cylinder wall 3, there are provided a plurality of injectors 4 for injection of lubricant into the cylinder 1.

As illustrated, the injectors 4 are distributed along a circle with the same angular distance between adjacent injectors 4, although this is not strictly necessary. Also, the arrangement along a circle is not necessary, seeing that an arrangement with axially shifted injectors is also possible, for example every second injector shifted towards the piston's top dead centre (TDC) relatively to a neighbouring injector.

As illustrated, the injectors 4 receive pressurised lubrication oil from a lubricator 11 through lubrication supply lines 9. The supplied oil is typically heated to a specific temperature, for example 50-60 degrees. The lubricator 11 supplies pressurised lubrication oil to the injectors 4 in precisely timed pulses, synchronised with the piston motion in the cylinder 1 of the engine. The injection by the lubricator 11 is controlled by a controller 12. For the synchronisation, the controller 12 monitors parameters for the actual state and motion of the engine, including speed, load, and position of the crankshaft, as the latter reveals the position of the pistons in the cylinders.

Each of the injectors 4 has a nozzle 5 with a nozzle aperture 5' from which lubricant is ejected under high pressure into the cylinder 1, for example in the form of a compact jet or as a fine atomized spray 8 with miniature droplets 7 for SIP injection.

For example for SIP injection, the nozzle aperture has a diameter of between 0.1 and 0.8 mm, such as between 0.2 and 0.5 mm, which at a pressure of 10-120 bar, for example 20 to 100 bar or 20 to 120 bar, optionally 30 to 80 bar or even 50 to 80 bar, or even at higher pressure than 120 bar, atomizes the lubricant into a fine spray 8, which is in contrast to a compact jet of lubricant. The swirl 10 of the scavenging air in the cylinder 1 transports and presses the spray 8 against the cylinder liner 2 such that an even distribution of lubrication oil on the cylinder liner 2 is achieved.

Optionally, the cylinder liner 2 is provided with free outs 6 for providing adequate space for the spray 8 or jet from the injector 4.

The lubricator 11 is connected to a supply conduit 14 for receiving lubricant from a lubricant supply 15, including an oil pump, and a return conduit 13 for return of lubricant, typically to an oil reservoir, optionally for recirculation of lubricant. The lubricant pressure in the supply conduit 14 is higher than the pressure in the return conduit 13, for example at least two times higher. The lubricant supply conduit 14 is also used for supplying lubricant for lubrication in addition to driving the actuator piston.

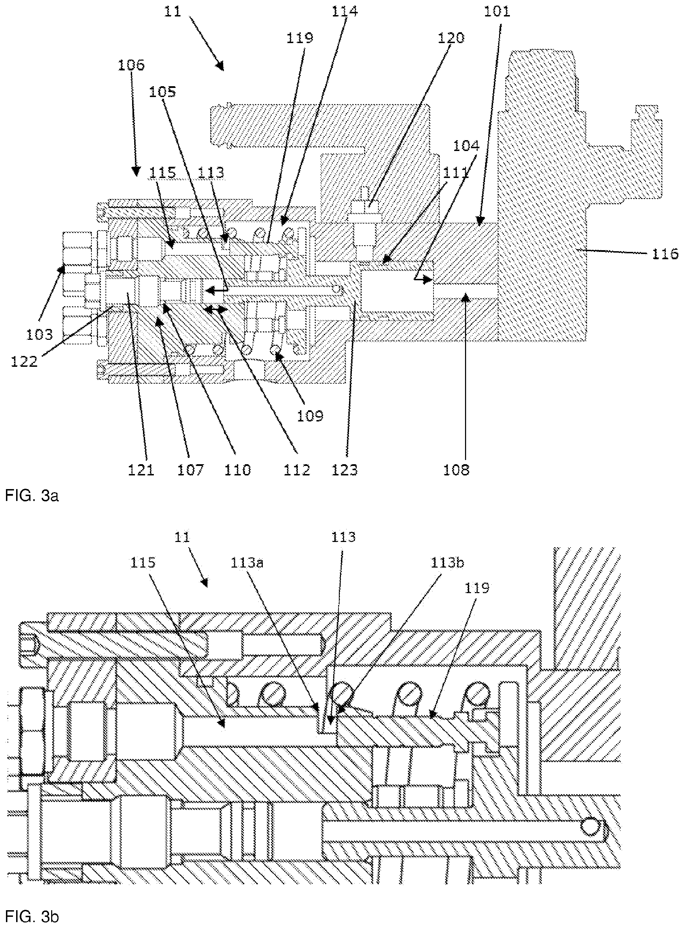

FIG. 3a illustrates an example of a lubricator 11 before modification. The numbering is equal to the modified prior art lubricator of FIG. 1.

FIG. 3b illustrates an enlarged part of the lubricator 11 around the inlet aperture 113 for the dosing channel 115 with the injection plunger 119. The inlet aperture 113 comprises a front aperture edge 113a and a rear aperture edge 113b, which in common define the width of the aperture 113.

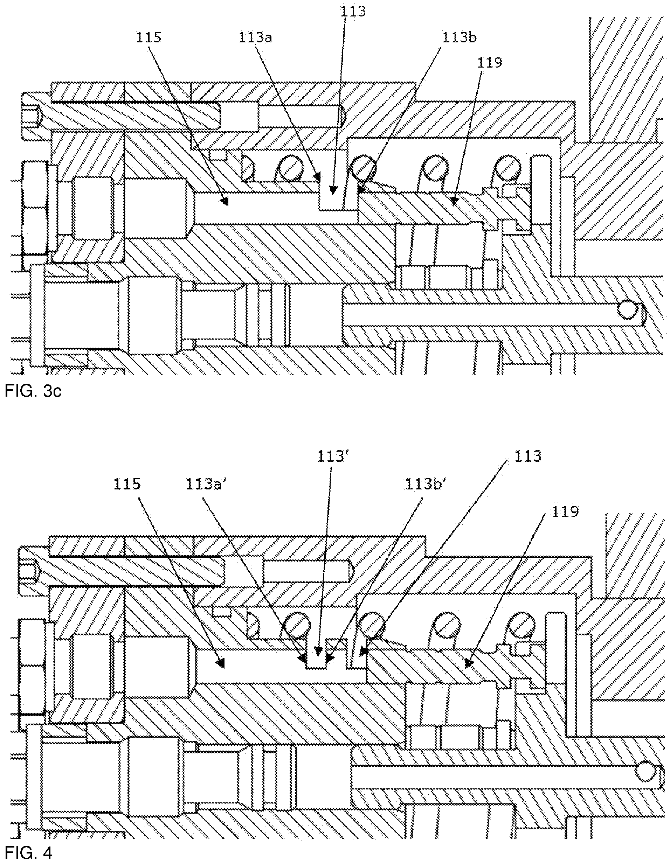

FIG. 3c illustrates the lubricator section of FIG. 3b after modification of the inlet aperture 113 to a larger width, which is best seen by the increased distance between the front aperture edge 113a and rear aperture edge 113b.

FIG. 4 illustrates a modification relatively to FIG. 3a and 3b by provision of a new inlet aperture 113' with a corresponding new front aperture edge 113a' and rear aperture edge 113b' closer to the forward end of the dosing channel 115, so that the dosing channel distance is reduced as compared to the lubricator 11 prior to modification.

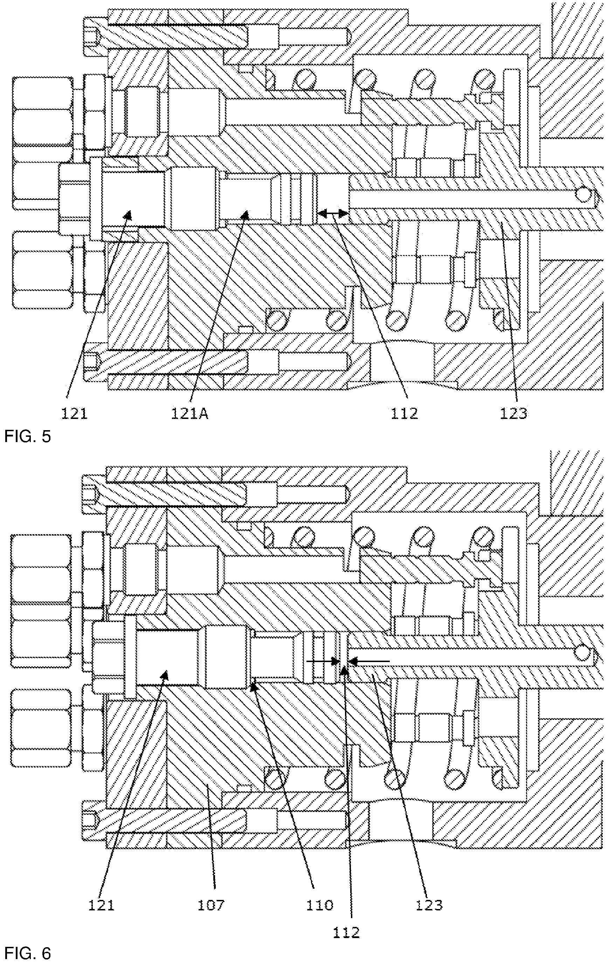

FIG. 5 illustrates an example of a lubricator 11 after modification of the adjusting screw 121 has been made longer. In this example, the middle section 121A of the adjusting screw 121 has been made longer. The longer adjusting screw reduces the stroke length 112 of the actuator piston 123.

FIG. 6 illustrate an example of a lubricator 11 after modification where spacer 122 as illustrated in FIG. 3a has been removed and the lubricator flange 107 has been modified by machining where the length of the threading 110 has been increased in order for the adjusting screw 121 to move closer to the actuator piston 123, which decreases the stroke length 112.

A variable adjustment of the stroke length by the adjusting screw 121 is potentially done by turning the adjusting crew 121 with a motor, for example DC motor, mounted to the end cap of the lubricator and controlled by the upgrade controller 19. This allows for electronic regulation of the stroke length, for example by the upgrade controller 16. It opens for a possibility of adjusting the stroke length between injections, for example based on operation parameters of the engine.

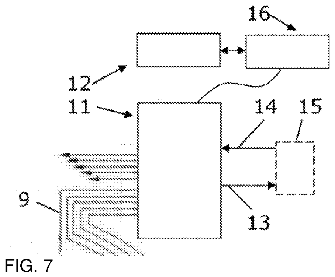

FIG. 7 illustrates an alternative embodiment, wherein an upgrade controller 16 is electronically inserted between the controller 12 and the lubricator 11.

The upgrade controller 16 is used for the adjustment of the feed rate and frequency. It receives the control signals from the controller 12, including the timing signal for the correct timing of the injection by the lubricator 11 as well as potential signals for adjusting the stroke length by the adjusting screw. On the basis of the signals received from the controller 12, the upgrade controller 11 sends modified timing signals and modified stroke adjustment signals to the lubricator 11. As the upgrade controller 16 is programmed for the modified stroke length, the signals from the controller 12 are transformed as necessary into modified signals in order to provide correct timing, frequency and stroke length of the lubricator 11.

For the case that the lubricator 11 comprises a feedback sensor 120, as illustrates in FIG 1 and FIG. 3a, the upgrade controller 16 also contains a signal emulator for emulated feedback sensor signals and sends the emulated feedback sensor signal to the controller 12 in order for the controller 12 to avoid registering lack of feedback sensor signals that would indicate lack of proper lubrication.

With reference to FIG. 3a, it is observed that the actuator piston 123 comprises two grooves 111A, 111. When the actuator piston moves, the first groove 111A will cause the feedback sensor 120 to give a first pulse in the feedback signal. Only if the stroke 112 is long enough to also move the second groove 111 past the feedback sensor, a further pulse is generated in the feedback signal. In the prior art system, the controller 12 would receive a double pulse in the feedback signal from the feedback sensor 120 if the stroke 112 was long enough for both grooves 111A and 111 to move past the feedback sensor 120. Only in the case of a feedback signal with a double pulse, the prior art controller 12 would read this as an indication for proper lubrication. As mentioned by the above examples, the reduced stroke length in the modified lubrication system results in the feedback sensor 120 only giving a single pulse. This single pulse is received by the upgrade controller 16 and recognised that the actuator piston 123 has moved for injection and is accepted as a signal for proper injection. In order to emulate the correct signal to the original controller 12, the emulator in the upgrade controller 16 creates an emulated double pulse signal and transmits it to the controller 12 in order to avoid the controller 12 giving an alarm due to a stroke 112 that is too short for the acceptance of the controller 12.

Accordingly, the upgrade controller has the potential to receive a feedback signal with the following options:
1) one pulse only - indicating that the actuator piston 123 has moved but less than the stroke length of the prior-upgrade lubrication system - the upgrade controller 16 sends an emulated double pulse signal to the controller 12 in order to emulate to the controller 12 that the lubrication has been proper:
2) a double pulse - indicating that the actuator piston 123 has moved at least as much as the stroke length of the prior-upgrade lubrication system - the upgrade controller 16 sends an emulated double pulse signal to the controller 12 in order to emulate to the controller 12 that the lubrication has been proper:
3) no pulse received - indicating that the actuator piston is not moving or a fault in the feedback sensor - the upgrade controller does not send an emulated signal to the controller in order to cause an alarm situation. The latter can be further supported by an option of the upgrade controller itself causing a warning signal in such situation. Such warning signal is potentially a visual signal and/or an audio signal. Examples are flashing lights, warning messages on a surveillance computer interface, as well as warning sounds.

## Claims

1. A method of improving the lubrication of a large slow running engine, the engine comprising a cylinder (1) with a reciprocal piston inside and with a plurality of lubricant injectors (4) distributed along a perimeter of the cylinder (1) for injection of lubricant into the cylinder (1) at various positions on the perimeter during injection phases; the engine further comprising a lubrication system for providing lubricant to the injectors (4) in the injection phases;
wherein the lubrication system comprises a lubricator (11) pipe-connected to each injector by a lubricant feed conduit (9) for providing pressurized lubricant to each injector through the lubricant feed conduit (9) in the injection phases;
wherein the lubricator (11) is of the type that comprises a housing (101) in which a hydraulic-driven actuator piston (123) is arranged reciprocal along a stroke length, wherein the lubricator (11) further comprises a stroke length (112) adjustment mechanism (110) configured for variably adjusting the stroke length (112) of the reciprocal hydraulic-driven actuator piston (123) only between an original minimum stroke length and an original maximum stroke length;
wherein the lubricator (11) further comprises a plurality of injection plungers (119) slidingly arranged in corresponding dosing channels (115), wherein the injection plungers (119) are coupled to the actuator piston (123) in order to be moved by the actuator piston (123) over the stroke length and as a consequence pressurize lubricant in the dosing channels (115) over a dosing channel distance for expelling the pressurized lubricant from the dosing channel (115) through a non-return valve (102) and through the feed conduit (9) to the injector (4) for injection of the lubricant into the engine cylinder (1); wherein the dosing channel distance defines the volume of lubricant expelled from the dosing channel (115) during the injection phase; wherein the dosing channel distance is adjustable between a minimum dosing channel distance and a maximum dosing channel distance of a lubricator before modification and which is established by adjusting the stroke length between the original minimum stroke length and the original maximum stroke length of the actuator piston (123);
wherein the lubricator (11) comprises an electrical valve arranged for causing switch between hydraulic pressure levels acting on the actuator piston (123) to hydraulically drive the actuator piston (123) reciprocally by the switching pressure levels;
wherein the lubrication system comprises a controller (12) electrically connected to the electrical valve (116) for controlling the timing of the switching for the injection phases by corresponding electrical signals transmitted from the controller to the electrical valve (116);
wherein the method comprises
- operating the engine with lubrication from the lubricator (11) under control of the controller (12) with one injection through the lubricant injectors (4) for each first number of engine revolutions;
- stopping the operation of the engine for modification of the lubrication system;
- modifying the lubrication system;
- continuing operation of the engine with the modified lubrication system;
**characterized in that** the modification of the lubrication system comprises modifying the lubricator (11) by reducing the dosing channel distance to less than the minimum dosing channel distance of the lubricator before modification and operating the engine with lubrication from the modified lubricator (11) at higher injection frequency with one injection phase for each second number of engine revolutions, wherein the second number is smaller than the first number, and with reduced dosing channel distance and correspondingly reduced volume of lubricant expelled from the dosing channel (115) per injection phase.

2. A method according to claim 1, wherein the method comprises adjusting the total lubricant consumption in the continued operation of the engine with the modified lubricator to less than or equal to the lubricant consumption prior to modifying the lubrication system.

3. A method according to claim 1 or 2, wherein the housing comprises an internal volume (114) containing lubricant, and the dosing channel (115) comprises an inlet aperture (113) that is in fluid-flow connection with the internal volume (114) for receiving lubricant from the internal volume (114) when the injection plungers (119) are in the retracted position; wherein the inlet aperture (113) has an aperture width between a rear aperture edge and a front aperture edge and is configured to be closed by the injection plunger (119) during motion of the injection plunger (119) past the front aperture edge so that further motion by the injection plunger (119) along the dosing channel distance, as measured from the front aperture edge to the most forward position of the injection plunger (119), pressurizes the received lubricant in the dosing channel (115) and expels it through the non-return valve (102); wherein the reducing of the dosing channel distance comprises increasing the width of the inlet aperture (113) in the forward direction or providing a further inlet channel closer to the most forward position of the injection plunger (119).

4. A method according to claim 1 or 2, wherein the reducing of the dosing channel distance comprises changing the stroke length of the actuator piston (123) to less than the original minimum stroke length; and wherein the method comprises operating the engine with lubrication from the modified lubricator with modified stroke length less than the original minimum stroke length.

5. A method according to claim 4, wherein the lubricator (11) prior to the modification of the lubrication system comprises a feedback sensor that is configured for measuring a predetermined minimum displacement of the actuator piston (123) during the injection phase and for providing a feedback signal when the minimum displacement is measured; wherein the controller (11) is configured for receiving the feedback signal as a confirmation for proper lubrication; wherein the modifying of the lubrication system comprises providing a feedback signal emulator (16) separate from the feedback sensor, electrically decoupling the feedback sensor from the controller (12) and feeding an emulated feedback signal from the feedback signal emulator (16) to the controller (12) for emulating proper lubrication to the controller (12) despite the actuator piston (123) being operated at a modified stroke length less than the original minimum stroke length and with less than the predetermined minimum displacement.

6. A method according to claim 4 or 5, wherein the stroke of the actuator piston (123) is defined by a forward end stop (105) and a rear end stop (101), wherein a position of the forward end stop (105) or the rear end stop (101) is defined by an adjustment mechanism that is adjustable between a minimum position and a maximum position, wherein the minimum position defines the minimum stroke length and the maximum position defines the maximum stroke length; wherein the modifying of the lubrication system comprises changing the minimum position to a modified position that defines the modified minimum stroke length.

7. A method according to claim 6, wherein the position of the forward end stop is defined by one end of a stroke-length adjusting screw (121), adjustable along the stroke length (112) by rotation of the stroke-length adjusting screw (121); wherein the modifying of the lubrication system comprises exchanging the stroke-length adjusting screw (121) with a longer, modified adjusting screw (121) or adding material to the stroke-length adjusting in a space between the stroke-length adjusting screw (121) and the actuator piston (123), thereby reducing the stroke length (112).

8. A method according to claim 6, wherein the position of the forward end stop is defined by one end of a stroke-length adjusting screw (121), adjustable along the stroke length by rotation of the screw; wherein the lubricator comprises a flange (107) with a screw support that is supporting the stroke-length adjusting screw (121); and wherein the modifying of the lubrication system comprises exchanging the flange (107) or removing material from the flange (107) by machining the flange (107), and as a result thereof displacing the screw support towards the actuator piston (123) and moving the forward end stop (105) as defined by the stroke-length adjusting screw (121) towards the actuator piston (123) for changing the minimum position.

9. A method according to claim 8, wherein the adjusting screw (121) is adjustable by rotation in a thread (110) in the flange (107), and wherein the modification by machining the flange (107) implies increasing the length of the threading (110) in a direction towards the actuator piston (123) for increasing adjustment length of the adjusting screw (121), and wherein the method comprises moving the adjusting screw (121) closer to the actuator piston (123) by rotation of the adjusting screw (121) in the threading (110) and thereby decreasing the stroke length 112.

10. A method of modifying a lubrication system for improving the lubrication of a large slow running engine, wherein the engine is of the type comprising a cylinder (1) with a reciprocal piston inside and with a plurality of lubricant injectors (4) distributed along a perimeter of the cylinder (1) for injection of lubricant into the cylinder (1) at various positions on the perimeter during injection phases; wherein the lubrication system is configured for providing lubricant to the injectors in the injection phases;
wherein the lubrication system comprises a lubricator (11) with connectors for being pipe-connected to each injector by a lubricant feed conduit (9) and for providing pressurized lubricant to each injector through the lubricant feed conduit (9) in the injection phases;
wherein the lubricator (11) is of the type that comprises a housing (101) in which a hydraulic-driven actuator piston (123) is arranged reciprocal along a stroke length, wherein the lubricator (11) further comprises a stroke length adjustment mechanism configured for variably adjusting the stroke length of the reciprocal hydraulic-driven actuator piston (123) only between an original minimum stroke length and an original maximum stroke length;
wherein the lubricator further comprises a plurality of injection plungers (119) slidingly arranged in corresponding dosing channels (115), wherein the injection plungers (119) are coupled to the actuator piston (123) in order to be moved by the actuator piston (123) over the stroke length and as a consequence pressurize lubricant in the dosing channels (115) over a dosing channel distance for expelling the pressurized lubricant from the dosing channel (115) through a non-return valve (102) and through the feed conduit (9) to the injector (4) for injection of the lubricant into the engine cylinder (1); wherein the dosing channel distance defines the volume of lubricant expelled from the dosing channel (115) during the injection phase; wherein the dosing channel distance is adjustable between a minimum dosing channel distance and a maximum dosing channel distance of a lubricator before modification and which is established by adjusting the stroke length between the original minimum stroke length and the original maximum stroke length of the actuator piston (123);
wherein the lubricator (11) comprises an electrical valve (116) arranged for causing switch between hydraulic pressure levels acting on the actuator piston (123) to hydraulically drive the actuator piston (123) reciprocally by the switching pressure levels;
wherein the lubrication system comprises a controller (12) electrically connected to the electrical valve (116) for controlling the timing of the switching for the injection phases by corresponding electrical signals transmitted from the controller to the electrical valve (116);
**characterized in that** the method comprises modifying the lubrication system by modifying the lubricator (11) by reducing the dosing channel distance to less than the minimum dosing channel distance of the lubricator before modification.

11. A method according to claim 10, wherein the reducing of the dosing channel distance comprises changing the stroke length of the actuator piston (123) to less than the original minimum stroke length.

12. A method according to claim 11, wherein the lubricator (11) prior to the modification of the lubrication system comprises a feedback sensor (120) that is configured for measuring a predetermined minimum displacement of the actuator piston (123) during the injection phase and for providing a feedback signal when the minimum displacement is measured; wherein the controller (11) is configured for receiving the feedback signal as a confirmation for proper lubrication; wherein the modifying of the lubrication system comprises providing a feedback signal emulator (16) separate from the feedback sensor, electrically decoupling the feedback sensor (120) from the controller (12) and feeding an emulated feedback signal from the feedback signal emulator (16) to the controller (12) for emulating proper lubrication to the controller (12) despite the actuator piston (123) being operated at a modified stroke length less than the original minimum stroke length and with less than the predetermined minimum displacement.

13. A method according to claim 11, wherein the feedback sensor (120) is configured for providing a feedback signal with a first type of feedback signal if the feedback sensor (120) senses displacement of the actuator piston (123) from a position in its idle phase between injection phases and wherein the feedback sensor (120) is providing a second type of feedback signal only if the actuator piston reaches the predetermined minimum displacement during the injection phase; wherein the feedback signal emulator (16) is providing an emulated second type of feedback signal to the controller (12) as a consequence of receiving a first type of signal from the feedback sensor (120) but not if no signal is received from the feedback sensor (120).

14. A method according to any one of the claims 11-13, wherein the stroke of the actuator piston (123) is defined by a forward end stop (105) and a rear end stop (101), wherein a position of the forward end stop (105) or the rear end stop (101) is defined by an adjustment mechanism that is adjustable between a minimum position and a maximum position, wherein the minimum position defines the minimum stroke length and the maximum position defines the maximum stroke length; wherein the modifying of the lubrication system comprises changing the minimum position to a modified position that defines the modified minimum stroke length.

15. A method according to claim 14, wherein the position of the forward end stop is defined by one end of a stroke-length adjusting screw (121), adjustable along the stroke length (112) by rotation of the stroke-length adjusting screw (121); wherein the modifying of the lubrication system comprises exchanging the stroke-length adjusting screw (121) with a longer, modified adjusting screw (121) or adding material to the stroke-length adjusting in a space between the stroke-length adjusting screw (121) and the actuator piston (123), thereby reducing the stroke length (112).

## Patentansprüche

1. Verfahren zum Verbessern der Schmierung eines großen, langsam laufenden Motors, wobei der Motor einen Zylinder (1) mit einem sich hin- und herbewegenden Kolben im Inneren und mit einer Vielzahl von Schmiermitteleinspritzvorrichtungen (4) umfasst, die entlang eines Umfangs des Zylinders (1) zum Einspritzen von Schmiermittel in den Zylinder (1) an verschiedenen Positionen des Umfangs während der Einspritzphasen verteilt sind; wobei der Motor ferner ein Schmiersystem zum Bereitstellen von Schmiermittel für die Einspritzvorrichtungen (4) in den Einspritzphasen umfasst;
wobei das Schmiersystem eine Schmiervorrichtung (11) umfasst, die mit jeder Einspritzvorrichtung durch eine Schmiermittelzufuhrleitung (9) zum Bereitstellen von unter Druck stehendem Schmiermittel für jede Einspritzvorrichtung durch die Schmiermittelzufuhrleitung (9) in den Einspritzphasen rohrverbunden ist;
wobei die Schmiervorrichtung (11) von der Art ist, die ein Gehäuse (101) umfasst, in dem ein hydraulisch angetriebener Betätigungskolben (123) entlang einer Hublänge sich hin- und herbewegend angeordnet ist, wobei die Schmiervorrichtung (11) ferner einen Anpassmechanismus (110) der Hublänge (112) umfasst, der zum variablen Anpassen der Hublänge (112) des sich hin- und herbewegenden hydraulisch angetriebenen Betätigungskolbens (123) lediglich zwischen einer ursprünglichen minimalen Hublänge und einer ursprünglichen maximalen Hublänge konfiguriert ist; wobei die Schmiervorrichtung (11) ferner eine Vielzahl von Einspritzstößeln (119) umfasst, die verschiebbar in entsprechenden Dosierkanälen (115) angeordnet sind, wobei die Einspritzstößel (119) an den Betätigungskolben (123) gekoppelt sind, um durch den Betätigungskolben (123) über die Hublänge bewegt zu werden und dadurch Schmiermittel in den Dosierkanälen (115) über eine Dosierkanalstrecke zum Ausstoßen des unter Druck stehenden Schmiermittels aus dem Dosierkanal (115) durch ein Rückschlagventil (102) und durch die Zufuhrleitung (9) zur Einspritzvorrichtung (4) zum Einspritzen des Schmiermittels in den Motorzylinder (1) unter Druck zu setzen; wobei der Dosierkanalabstand das Schmiermittelvolumen definiert, das während der Einspritzphase aus dem Dosierkanal (115) ausgestoßen wird; wobei der Dosierkanalabstand zwischen einem minimalen Dosierkanalabstand und einem maximalen Dosierkanalabstand einer Schmiervorrichtung vor der Modifikation anpassbar ist und der durch Anpassen der Hublänge zwischen der ursprünglichen minimalen Hublänge und der ursprünglichen maximalen Hublänge des Betätigungskolbens (123) festgelegt wird;
wobei die Schmiervorrichtung (11) ein elektrisches Ventil umfasst, das zum Veranlassen eines Umschaltens zwischen Hydraulikdruckpegeln angeordnet ist, die auf den Betätigungskolben (123) wirken, um den Betätigungskolben (123) sich hydraulisch hin- und herbewegend durch die Umschaltdruckpegel anzutreiben;
wobei das Schmiersystem eine Steuerung (12) umfasst, die elektrisch mit dem elektrischen Ventil (116) zum Steuern des Zeitpunkts des Umschaltens für die Einspritzphasen durch entsprechende elektrische Signale verbunden ist, die von der Steuerung an das elektrische Ventil (116) übertragen werden; wobei das Verfahren Folgendes umfasst:
- Betreiben des Motors mit Schmierung von der Schmiervorrichtung (11) unter Steuerung der Steuerung (12) mit einer Einspritzung durch die Schmiermitteleinspritzvorrichtungen (4) für jede erste Anzahl von Motorumdrehungen;
- Anhalten des Betriebs des Motors zur Modifikation des Schmiersystems;
- Modifizieren des Schmiersystems;
- Fortsetzen des Betriebs des Motors mit dem modifizierten Schmiersystem;
**dadurch gekennzeichnet, dass** die Modifikation des Schmiersystems das Modifizieren der Schmiervorrichtung (11) durch Verringern des Dosierkanalabstands auf weniger als den minimalen Dosierkanalabstand der Schmiervorrichtung vor der Modifikation und Betreiben des Motors mit Schmierung von der modifizierten Schmiervorrichtung (11) bei einer höheren Einspritzfrequenz mit einer Einspritzphase pro zweiter Motorumdrehungsanzahl, wobei die zweite Anzahl kleiner als die erste Anzahl ist, und mit verringertem Dosierkanalabstand und entsprechend verringertem Schmiermittelvolumen umfasst, das pro Einspritzphase aus dem Dosierkanal (115) ausgestoßen wird.

2. Verfahren nach Anspruch 1, wobei das Verfahren das Anpassen des gesamten Schmiermittelverbrauchs im fortgesetzten Betrieb des Motors mit der modifizierten Schmiervorrichtung auf weniger oder gleich dem Schmiermittelverbrauch vor dem Modifizieren des Schmiersystems umfasst.

3. Verfahren nach Anspruch 1 oder 2, wobei das Gehäuse ein Schmiermittel enthaltendes Innenvolumen (114) aufweist und der Dosierkanal (115) eine mit dem Innenvolumen (114) in Fluidstromverbindung stehende Einlassöffnung (113) zur Aufnahme von Schmiermittel aus dem Innenvolumen (114) aufweist, wenn sich die Einspritzstößel (119) in der zurückgezogenen Stellung befinden; wobei die Einlassöffnung (113) eine Öffnungsbreite zwischen einer hinteren Öffnungskante und einer vorderen Öffnungskante aufweist und dazu konfiguriert ist, durch den Einspritzstößel (119) während der Bewegung des Einspritzstößels (119) an der vorderen Öffnungskante vorbei geschlossen zu werden, so dass eine weitere Bewegung durch den Einspritzstößel (119) entlang des Dosierkanalabstands, wie von der vorderen Öffnungskante bis zur vordersten Stellung des Einspritzstößels (119) gemessen, das aufgenommene Schmiermittel im Dosierkanal (115) unter Druck setzt und es durch das Rückschlagventil (102) drückt; wobei Verringern des Dosierkanalabstands das Vergrößern der Breite der Einlassöffnung (113) in der Vorwärtsrichtung oder Bereitstellen eines weiteren Einlasskanals näher an der vordersten Stellung des Einspritzstößels (119) umfasst.

4. Verfahren nach Anspruch 1 oder 2, wobei das Verringern des Dosierkanalabstands das Verändern der Hublänge des Betätigungskolbens (123) auf weniger als die ursprüngliche minimale Hublänge umfasst; und wobei das Verfahren das Betreiben des Motors mit Schmierung von der modifizierten Schmiervorrichtung mit einer modifizierten Hublänge umfasst, die kleiner als die ursprüngliche minimale Hublänge ist.

5. Verfahren nach Anspruch 4, wobei die Schmiervorrichtung (11) vor der Modifikation des Schmiersystems einen Rückkopplungssensor umfasst, der zum Messen einer vorbestimmten minimalen Verschiebung des Betätigungskolbens (123) während der Einspritzphase und zum Bereitstellen eines Rückkopplungssignals konfiguriert ist, wenn die minimale Verschiebung gemessen wird; wobei die Steuerung (11) zum Empfangen des Rückkopplungssignals als eine Bestätigung für eine ordnungsgemäße Schmierung konfiguriert ist; wobei Modifizieren des Schmiersystems Bereitstellen eines Rückkopplungssignalemulators (16) getrennt von dem Rückkopplungssensor, elektrisches Entkoppeln des Rückkopplungssensors von der Steuerung (12) und Zuführen eines emulierten Rückkopplungssignals von dem Rückkopplungssignalemulator (16) zu der Steuerung (12) zum Emulieren einer geeigneten Schmierung für die Steuerung (12) umfasst, obwohl der Betätigungskolben (123) mit einer modifizierten Hublänge, die kleiner als die ursprüngliche minimale Hublänge ist, und mit weniger als der vorbestimmten minimalen Verschiebung betrieben wird.

6. Verfahren nach Anspruch 4 oder 5, wobei der Hub des Betätigungskolbens (123) durch einen vorderen Endanschlag (105) und einen hinteren Endanschlags (101) definiert ist, wobei eine Position des vorderen Endanschlags (105) oder des hinteren Endanschlags (101) durch einen Anpassungsmechanismus definiert ist, der zwischen einer Minimalposition und einer Maximalposition anpassbar ist, wobei die Minimalposition die minimale Hublänge und die Maximalposition die maximale Hublänge definiert; wobei das Modifizieren des Schmiersystems Ändern der Minimalposition in eine modifizierte Position umfasst, welche die modifizierte minimale Hublänge definiert.

7. Verfahren nach Anspruch 6, wobei die Position des vorderen Endanschlags durch ein Ende einer Hublängenanpassschraube (121) definiert wird, die entlang der Hublänge (112) durch Drehen der Hublängenanpassschraube (121) anpassbar ist; wobei das Modifizieren des Schmiersystems Austauschen der Hublängenanpassschraube (121) durch eine längere, modifizierte Anpassschraube (121) oder Hinzufügen von Material zur Hublängenanpassschraube in einem Raum zwischen der Hublängenanpassschraube (121) und dem Betätigungskolben (123) umfasst, wodurch die Hublänge (112) verringert wird.

8. Verfahren nach Anspruch 6, wobei die Position des vorderen Endanschlags durch ein Ende einer Hublängenanpassschraube (121) definiert ist, die entlang der Hublänge durch Drehen der Schraube anpassbar ist; wobei die Schmiervorrichtung einen Flansch (107) mit einer Schraubenhalterung umfasst, welche die Hublängenanpassschraube (121) trägt; und wobei das Modifizieren des Schmiersystems Austauschen des Flansches (107) oder Entfernen von Material von dem Flansch (107) durch maschinelles Bearbeiten des Flansches (107) und als Folge davon Verschieben der Schraubenhalterung in Richtung des Betätigungskolbens (123) und Bewegen des vorderen Endanschlags (105), wie gemäß der Hublängenanpassschraube (121) definiert, in Richtung des Betätigungskolbens (123) zur Änderung der Minimalposition umfasst.

9. Verfahren nach Anspruch 8, wobei die Anpassschraube (121) durch Drehung in einem Gewinde (110) im Flansch (107) anpassbar ist, und wobei die Modifikation durch maschinelles Bearbeiten des Flansches (107) ein Vergrößern der Länge des Gewindes (110) in eine Richtung in Richtung des Betätigungskolbens (123) zum Vergrößern der Anpasslänge der Anpassschraube (121) impliziert, und wobei das Verfahren Bewegen der Anpassschraube (121) näher an den Betätigungskolben (123) durch Drehung der Anpassschraube (121) in das Gewinde (110) und dadurch Verringern der Hublänge 112 umfasst.

10. Verfahren des Modifizierens eines Schmiersystems zum Verbessern der Schmierung eines großen, langsam laufenden Motors, wobei der Motor von der Art ist, die einen Zylinder (1) mit einem sich hin- und herbewegenden Kolben im Inneren und mit einer Vielzahl von Schmiermitteleinspritzvorrichtungen (4) umfasst, die entlang eines Umfangs des Zylinders (1) zum Einspritzen von Schmiermittel in den Zylinder (1) an verschiedenen Positionen des Umfangs während der Einspritzphasen verteilt sind; wobei das Schmiersystem zum Bereitstellen von Schmiermittel für die Einspritzvorrichtungen in den Einspritzphasen konfiguriert ist;
wobei das Schmiersystem eine Schmiervorrichtung (11) mit Anschlüssen umfasst, um mit jeder Einspritzvorrichtung durch eine Schmiermittelzufuhrleitung (9) und zum Bereitstellen von unter Druck stehendem Schmiermittel für jede Einspritzvorrichtung durch die Schmiermittelzufuhrleitung (9) in den Einspritzphasen rohrverbunden zu sein;
wobei die Schmiervorrichtung (11) von der Art ist, die ein Gehäuse (101) umfasst, in dem ein hydraulisch angetriebener Betätigungskolben (123) entlang einer Hublänge sich hin- und herbewegend angeordnet ist, wobei die Schmiervorrichtung (11) ferner einen Anpassmechanismus der Hublänge umfasst, der zum variablen Anpassen der Hublänge des sich hin- und herbewegenden hydraulisch angetriebenen Betätigungskolbens (123) lediglich zwischen einer ursprünglichen minimalen Hublänge und einer ursprünglichen maximalen Hublänge konfiguriert ist;
wobei die Schmiervorrichtung ferner eine Vielzahl von Einspritzstößeln (119) umfasst, die verschiebbar in entsprechenden Dosierkanälen (115) angeordnet sind, wobei die Einspritzstößel (119) an den Betätigungskolben (123) gekoppelt sind, um durch den Betätigungskolben (123) über die Hublänge bewegt zu werden und dadurch Schmiermittel in den Dosierkanälen (115) über eine Dosierkanalstrecke zum Ausstoßen des unter Druck stehenden Schmiermittels aus dem Dosierkanal (115) durch ein Rückschlagventil (102) und durch die Zufuhrleitung (9) zur Einspritzvorrichtung (4) zum Einspritzen des Schmiermittels in den Motorzylinder (1) unter Druck zu setzen; wobei der Dosierkanalabstand das Schmiermittelvolumen definiert, das während der Einspritzphase aus dem Dosierkanal (115) ausgestoßen wird; wobei der Dosierkanalabstand zwischen einem minimalen Dosierkanalabstand und einem maximalen Dosierkanalabstand einer Schmiervorrichtung vor der Modifikation anpassbar ist und der durch Anpassen der Hublänge zwischen der ursprünglichen minimalen Hublänge und der ursprünglichen maximalen Hublänge des Betätigungskolbens (123) festgelegt wird;
wobei die Schmiervorrichtung (11) ein elektrisches Ventil (116) umfasst, das zum Veranlassen eines Umschaltens zwischen Hydraulikdruckpegeln angeordnet ist, die auf den Betätigungskolben (123) wirken, um den Betätigungskolben (123) sich hydraulisch hin- und herbewegend durch die Umschaltdruckpegel anzutreiben;
wobei das Schmiersystem eine Steuerung (12) umfasst, die elektrisch mit dem elektrischen Ventil (116) zum Steuern des Zeitpunkts des Umschaltens für die Einspritzphasen durch entsprechende elektrische Signale verbunden ist, die von der Steuerung an das elektrische Ventil (116) übertragen werden; **dadurch gekennzeichnet, dass** das Verfahren das Modifizieren des Schmiersystems durch Modifizieren der Schmiervorrichtung (11) durch Verringern des Dosierkanalabstands auf weniger als den minimalen Dosierkanalabstand der Schmiervorrichtung vor der Modifikation umfasst.

11. Verfahren nach Anspruch 10, wobei das Verringern des Dosierkanalabstands Ändern der Hublänge des Betätigungskolbens (123) auf weniger als die ursprüngliche minimale Hublänge umfasst.

12. Verfahren nach Anspruch 11, wobei die Schmiervorrichtung (11) vor der Modifikation des Schmiersystems einen Rückkopplungssensor (120) umfasst, der zum Messen einer vorbestimmten minimalen Verschiebung des Betätigungskolbens (123) während der Einspritzphase und zum Bereitstellen eines Rückkopplungssignals konfiguriert ist, wenn die minimale Verschiebung gemessen wird; wobei die Steuerung (11) zum Empfangen des Rückkopplungssignals als eine Bestätigung für eine ordnungsgemäße Schmierung konfiguriert ist; wobei Modifizieren des Schmiersystems Bereitstellen eines Rückkopplungssignalemulators (16) getrennt von dem Rückkopplungssensor, elektrisches Entkoppeln des Rückkopplungssensors (120) von der Steuerung (12) und Zuführen eines emulierten Rückkopplungssignals von dem Rückkopplungssignalemulator (16) zu der Steuerung (12) zum Emulieren einer geeigneten Schmierung für die Steuerung (12) umfasst, obwohl der Betätigungskolben (123) mit einer modifizierten Hublänge, die kleiner als die ursprüngliche minimale Hublänge ist, und mit weniger als der vorbestimmten minimalen Verschiebung betrieben wird.

13. Verfahren nach Anspruch 11, wobei der Rückkopplungssensor (120) zum Bereitstellen eines Rückkopplungssignals mit einer ersten Art von Rückkopplungssignal konfiguriert ist, wenn der Rückkopplungssensor (120) eine Verschiebung des Betätigungskolbens (123) aus einer Stellung in seiner Ruhephase zwischen Einspritzphasen erfasst, und wobei der Rückkopplungssensor (120) nur dann eine zweite Art von Rückkopplungssignal bereitstellt, wenn der Betätigungskolben während der Einspritzphase die vorbestimmte minimale Verschiebung erreicht; wobei der Rückkopplungssignalemulator (16) der Steuerung (12) eine emulierte zweite Art von Rückkopplungssignal als eine Folge des Empfangs einer ersten Signalart von dem Rückkopplungssensor (120) bereitstellt, jedoch nicht, wenn kein Signal von dem Rückkopplungssensor (120) empfangen wird.

14. Verfahren nach einem der Ansprüche 11-13, wobei der Hub des Betätigungskolbens (123) durch einen vorderen Endanschlag (105) und einen hinteren Endanschlag (101) definiert ist, wobei eine Position des vorderen Endanschlags (105) oder des hinteren Endanschlags (101) durch einen Anpassungsmechanismus definiert ist, der zwischen einer Minimalposition und einer Maximalposition anpassbar ist, wobei die Minimalposition die minimale Hublänge und die Maximalposition die maximale Hublänge definiert; wobei das Modifizieren des Schmiersystems Ändern der Minimalposition in eine modifizierte Position umfasst, welche die modifizierte minimale Hublänge definiert.

15. Verfahren nach Anspruch 14, wobei die Position des vorderen Endanschlags durch ein Ende einer Hublängenanpassschraube (121) definiert wird, die entlang der Hublänge (112) durch Drehen der Hublängenanpassschraube (121) anpassbar ist; wobei das Modifizieren des Schmiersystems Austauschen der Hublängenanpassschraube (121) durch eine längere, modifizierte Anpassschraube (121) oder Hinzufügen von Material zur Hublängenanpassschraube in einem Raum zwischen der Hublängenanpassschraube (121) und dem Betätigungskolben (123) umfasst, wodurch die Hublänge (112) verringert wird.

## Revendications

1. Procédé d'amélioration de la lubrification d'un gros moteur à régime lent, le moteur comprenant un cylindre (1) doté d'un piston alternatif à l'intérieur et d'une pluralité d'injecteurs de lubrifiant (4) répartis le long d'un périmètre du cylindre (1) pour l'injection de lubrifiant dans le cylindre (1) à différentes positions sur le périmètre lors des phases d'injection ; le moteur comprenant en outre un système de lubrification pour fournir du lubrifiant aux injecteurs (4) dans les phases d'injection ;
dans lequel le système de lubrification comprend un lubrificateur (11) relié par tuyau à chaque injecteur par un conduit d'alimentation en lubrifiant (9) pour fournir du lubrifiant sous pression à chaque injecteur à travers le conduit d'alimentation en lubrifiant (9) dans les phases d'injection ; dans lequel le lubrificateur (11) est du type qui comprend un boîtier (101) dans lequel un piston actionneur à entraînement hydraulique (123) est disposé de manière alternative le long d'une longueur de course, dans lequel le lubrificateur (11) comprend en outre un mécanisme de réglage (110) de longueur de course (112) configuré pour régler de manière variable la longueur de course (112) du piston actionneur à entraînement hydraulique (123) alternatif uniquement entre une longueur de course minimale initiale et une longueur de course maximale initiale ;
dans lequel le lubrificateur (11) comprend en outre une pluralité de plongeurs d'injection (119) disposés de manière coulissante dans des canaux de dosage (115) correspondants, dans lequel les plongeurs d'injection (119) sont couplés au piston actionneur (123) afin d'être déplacés par le piston actionneur (123) sur la longueur de course et par conséquent de pressuriser le lubrifiant dans les canaux de dosage (115) sur une distance de canal de dosage pour expulser le lubrifiant sous pression du canal de dosage (115) à travers une vanne anti-retour (102) et à travers le conduit d'alimentation (9) vers l'injecteur (4) pour l'injection du lubrifiant dans le cylindre moteur (1) ; dans lequel la distance de canal de dosage définit le volume de lubrifiant expulsé du canal de dosage (115) lors de la phase d'injection ; dans lequel la distance de canal de dosage est réglable entre une distance minimale de canal de dosage et une distance maximale de canal de dosage d'un lubrificateur avant modification et qui est établie en réglant la longueur de course entre la longueur de course minimale initiale et la longueur de course maximale initiale du piston actionneur (123) ;
dans lequel le lubrificateur (11) comprend une vanne électrique disposée pour provoquer une commutation entre les niveaux de pression hydraulique agissant sur le piston actionneur (123) pour entraîner hydrauliquement le piston actionneur (123) alternativement par les niveaux de pression de commutation ; dans lequel le système de lubrification comprend un dispositif de commande (12) connecté électriquement à la vanne électrique (116) pour commander le moment de la commutation pour les phases d'injection par des signaux électriques correspondants transmis du dispositif de commande à la vanne électrique (116) ;
dans lequel le procédé comprend
- le fonctionnement du moteur avec lubrification à partir du lubrificateur (11) sous la commande du dispositif de commande (12) avec une injection à travers les injecteurs de lubrifiant (4) pour chaque premier nombre de tours de moteur ;
- l'arrêt du fonctionnement du moteur pour modifier le système de lubrification ;
- la modification du système de lubrification ;
- le fonctionnement continu du moteur avec le système de lubrification modifié ;
**caractérisé en ce que** la modification du système de lubrification comprend la modification du lubrificateur (11) en réduisant la distance de canal de dosage à une valeur inférieure à la distance minimale de canal de dosage du lubrificateur avant modification et en faisant fonctionner le moteur avec une lubrification du lubrificateur modifié (11) à une fréquence d'injection supérieure avec une phase d'injection pour chaque second nombre de tours de moteur, dans lequel le second nombre est inférieur au premier nombre, et avec une distance de canal de dosage réduite et un volume de lubrifiant réduit en conséquence expulsé du canal de dosage (115) par phase d'injection.

2. Procédé selon la revendication 1, dans lequel le procédé comprend le réglage de la consommation totale de lubrifiant dans le fonctionnement continu du moteur avec le lubrificateur modifié à une valeur inférieure ou égale à la consommation de lubrifiant avant la modification du système de lubrification.

3. Procédé selon la revendication 1 ou 2, dans lequel le boîtier comprend un volume interne (114) contenant du lubrifiant, et le canal de dosage (115) comprend une ouverture d'entrée (113) qui est en connexion d'écoulement de fluide avec le volume interne (114) pour recevoir du lubrifiant du volume interne (114) lorsque les plongeurs d'injection (119) sont en position rétractée ; dans lequel l'ouverture d'entrée (113) a une largeur d'ouverture entre un bord d'ouverture arrière et un bord d'ouverture avant et est configurée pour être fermée par le plongeur d'injection (119) pendant le mouvement du plongeur d'injection (119) devant le bord d'ouverture avant de sorte qu'un mouvement supplémentaire du plongeur d'injection (119) le long de la distance de canal de dosage, telle que mesurée depuis le bord d'ouverture avant jusqu'à la position la plus vers l'avant du plongeur d'injection (119), pressurise le lubrifiant reçu dans le canal de dosage (115) et l'expulse à travers la vanne anti-retour (102) ; dans lequel la réduction de la distance de canal de dosage comprend l'augmentation de la largeur de l'ouverture d'entrée (113) dans la direction vers l'avant ou la fourniture d'un autre canal d'entrée plus proche de la position la plus vers l'avant du plongeur d'injection (119) .

4. Procédé selon la revendication 1 ou 2, dans lequel la réduction de la distance de canal de dosage comprend le changement de la longueur de course du piston actionneur (123) à une valeur inférieure à la longueur de course minimale initiale ; et dans lequel le procédé comprend le fonctionnement du moteur avec une lubrification du lubrificateur modifié avec une longueur de course modifiée inférieure à la longueur de course minimale initiale.

5. Procédé selon la revendication 4, dans lequel le lubrificateur (11) avant la modification du système de lubrification comprend un capteur de rétroaction qui est configuré pour mesurer un déplacement minimum prédéterminé du piston actionneur (123) lors de la phase d'injection et pour fournir un signal de rétroaction lorsque le déplacement minimal est mesuré ; dans lequel le dispositif de commande (11) est configuré pour recevoir le signal de rétroaction en tant que confirmation d'une lubrification correcte ; dans lequel la modification du système de lubrification comprend la fourniture d'un émulateur de signal de rétroaction (16) séparé du capteur de rétroaction, le découplage électrique du capteur de rétroaction du dispositif de commande (12) et l'envoi d'un signal de rétroaction émulé de l'émulateur de signal de rétroaction (16) au dispositif de commande (12) pour émuler une lubrification correcte du dispositif de commande (12) malgré le fait que le piston actionneur (123) est actionné à une longueur de course modifiée inférieure à la longueur de course minimale initiale et à une valeur inférieure au déplacement minimal prédéterminé.

6. Procédé selon la revendication 4 ou 5, dans lequel la course du piston actionneur (123) est définie par une butée avant (105) et une butée arrière (101), dans lequel une position de la butée avant (105) ou de la butée arrière (101) est définie par un mécanisme de réglage réglable entre une position minimale et une position maximale, dans lequel la position minimale définit la longueur de course minimale et la position maximale définit la longueur de course maximale ; dans lequel la modification du système de lubrification comprend le passage de la position minimale à une position modifiée qui définit la longueur de course minimale modifiée.

7. Procédé selon la revendication 6, dans lequel la position de la butée avant est définie par une extrémité d'une vis de réglage de longueur de course (121), réglable le long de la longueur de course (112) par rotation de la vis de réglage de longueur de course (121) ; dans lequel la modification du système de lubrification comprend le remplacement de la vis de réglage de longueur de course (121) par une vis de réglage modifiée plus longue (121) ou l'ajout de matériau au réglage de longueur de course dans un espace entre la vis de réglage de longueur de course (121) et le piston actionneur (123), réduisant ainsi la longueur de course (112).

8. Procédé selon la revendication 6, dans lequel la position de la butée avant est définie par une extrémité d'une vis de réglage de longueur de course (121), réglable le long de la longueur de course par rotation de la vis ; dans lequel le lubrificateur comprend une bride (107) avec un support de vis qui supporte la vis de réglage de longueur de course (121) ; et dans lequel la modification du système de lubrification comprend le remplacement de la bride (107) ou l'enlèvement de matériau de la bride (107) par usinage de la bride (107), et en conséquence le déplacement du support de vis vers le piston actionneur (123) et le déplacement la butée avant (105) telle que définie par la vis de réglage de longueur de course (121) vers le piston actionneur (123) pour modifier la position minimale.

9. Procédé selon la revendication 8, dans lequel la vis de réglage (121) est réglable par rotation dans un filetage (110) dans la bride (107), et dans lequel la modification par usinage de la bride (107) implique d'augmenter la longueur du filetage (110) dans une direction vers le piston actionneur (123) pour augmenter la longueur de réglage de la vis de réglage (121), et dans lequel le procédé comprend le déplacement de la vis de réglage (121) plus près du piston actionneur (123) par rotation de la vis de réglage (121) dans le filetage (110) et ainsi la diminution de la longueur de course 112.

10. Procédé de modification d'un système de lubrification pour améliorer la lubrification d'un gros moteur à régime lent, dans lequel le moteur est du type comprenant un cylindre (1) doté d'un piston alternatif à l'intérieur et d'une pluralité d'injecteurs de lubrifiant (4) répartis le long d'un périmètre du cylindre (1) pour l'injection de lubrifiant dans le cylindre (1) à différentes positions sur le périmètre lors des phases d'injection ; dans lequel le système de lubrification est configuré pour fournir du lubrifiant aux injecteurs dans les phases d'injection ;
dans lequel le système de lubrification comprend un lubrificateur (11) doté de connecteurs devant être relié par tuyau à chaque injecteur par un conduit d'alimentation en lubrifiant (9) et pour fournir du lubrifiant sous pression à chaque injecteur à travers le conduit d'alimentation en lubrifiant (9) dans les phases d'injection ;
dans lequel le lubrificateur (11) est du type qui comprend un boîtier (101) dans lequel un piston actionneur à entraînement hydraulique (123) est disposé de manière alternative le long d'une longueur de course, dans lequel le lubrificateur (11) comprend en outre un mécanisme de réglage de longueur de course configuré pour régler de manière variable la longueur de course du piston actionneur à entraînement hydraulique (123) alternatif uniquement entre une longueur de course minimale initiale et une longueur de course maximale initiale ;
dans lequel le lubrificateur comprend en outre une pluralité de plongeurs d'injection (119) disposés de manière coulissante dans des canaux de dosage correspondants (115), dans lequel les plongeurs d'injection (119) sont couplés au piston actionneur (123) afin d'être déplacés par le piston actionneur (123) sur la longueur de course et par conséquent de pressuriser le lubrifiant dans les canaux de dosage (115) sur une distance de canal de dosage pour expulser le lubrifiant sous pression du canal de dosage (115) à travers une vanne anti-retour (102) et à travers le conduit d'alimentation (9) vers l'injecteur (4) pour l'injection du lubrifiant dans le cylindre moteur (1) ; dans lequel la distance de canal de dosage définit le volume de lubrifiant expulsé du canal de dosage (115) lors de la phase d'injection ; dans lequel la distance de canal de dosage est réglable entre une distance minimale de canal de dosage et une distance maximale de canal de dosage d'un lubrificateur avant modification et qui est établie en réglant la longueur de course entre la longueur de course minimale initiale et la longueur de course maximale initiale du piston actionneur (123) ;
dans lequel le lubrificateur (11) comprend une vanne électrique (116) disposée pour provoquer une commutation entre les niveaux de pression hydraulique agissant sur le piston actionneur (123) pour entraîner hydrauliquement le piston actionneur (123) alternativement par les niveaux de pression de commutation ; dans lequel le système de lubrification comprend un dispositif de commande (12) connecté électriquement à la vanne électrique (116) pour commander le moment de la commutation pour les phases d'injection par des signaux électriques correspondants transmis du dispositif de commande à la vanne électrique (116) ; **caractérisé en ce que** le procédé comprend la modification du système de lubrification en modifiant le lubrificateur (11) en réduisant la distance de canal de dosage à une valeur inférieure à la distance minimale de canal de dosage du lubrificateur avant modification.

11. Procédé selon la revendication 10, dans lequel la réduction de la distance de canal de dosage comprend le changement de la longueur de course du piston actionneur (123) à une valeur inférieure à la longueur de course minimale initiale.

12. Procédé selon la revendication 11, dans lequel le lubrificateur (11) avant la modification du système de lubrification comprend un capteur de rétroaction (120) qui est configuré pour mesurer un déplacement minimum prédéterminé du piston actionneur (123) lors de la phase d'injection et pour fournir un signal de rétroaction lorsque le déplacement minimal est mesuré ; dans lequel le dispositif de commande (11) est configuré pour recevoir le signal de rétroaction en tant que confirmation d'une lubrification correcte ; dans lequel la modification du système de lubrification comprend la fourniture d'un émulateur de signal de rétroaction (16) séparé du capteur de rétroaction, le découplage électrique du capteur de rétroaction (120) du dispositif de commande (12) et l'envoi d'un signal de rétroaction émulé de l'émulateur de signal de rétroaction (16) au dispositif de commande (12) pour émuler une lubrification correcte du dispositif de commande (12) malgré le fait que le piston actionneur (123) est actionné à une longueur de course modifiée inférieure à la longueur de course minimale initiale et à une valeur inférieure au déplacement minimal prédéterminé.

13. Procédé selon la revendication 11, dans lequel le capteur de rétroaction (120) est configuré pour fournir un signal de rétroaction avec un premier type de signal de rétroaction si le capteur de rétroaction (120) détecte le déplacement du piston actionneur (123) à partir d'une position dans sa position de repos entre les phases d'injection et dans lequel le capteur de rétroaction (120) fournit un second type de signal de rétroaction uniquement si le piston actionneur atteint le déplacement minimal prédéterminé lors de la phase d'injection ; dans lequel l'émulateur de signal de rétroaction (16) fournit un second type émulé de signal de rétroaction au dispositif de commande (12) suite à la réception d'un premier type de signal du capteur de rétroaction (120) mais pas si aucun signal n'est reçu du capteur de rétroaction (120).

14. Procédé selon l'une quelconque des revendications 11 à 13, dans lequel la course du piston actionneur (123) est définie par une butée avant (105) et une butée arrière (101), dans lequel une position de la butée avant (105) ou la butée arrière (101) est définie par un mécanisme de réglage réglable entre une position minimale et une position maximale, dans lequel la position minimale définit la longueur de course minimale et la position maximale définit la longueur de course maximale ; dans lequel la modification du système de lubrification comprend le passage de la position minimale à une position modifiée qui définit la longueur de course minimale modifiée.

15. Procédé selon la revendication 14, dans lequel la position de la butée avant est définie par une extrémité d'une vis de réglage de longueur de course (121), réglable le long de la longueur de course (112) par rotation de la vis de réglage de longueur de course (121) ; dans lequel la modification du système de lubrification comprend le remplacement de la vis de réglage de longueur de course (121) par une vis de réglage modifiée plus longue (121) ou l'ajout de matériau au réglage de longueur de course dans un espace entre la vis de réglage de longueur de course (121) et le piston actionneur (123), réduisant ainsi la longueur de course (112).
